(19) 

Europäisches Patentamt
European Patent Office
Office européen des brevets

(11)  **EP 4 625 581 A1**

(12)  **EUROPEAN PATENT APPLICATION**

(43) Date of publication:
01.10.2025 Bulletin 2025/40

(21) Application number: 25158162.5

(22) Date of filing: 17.02.2025

(51) International Patent Classification (IPC):
H01M 10/0562 (2010.01)  H01M 10/0585 (2010.01)
H01M 50/204 (2021.01)  H01M 50/451 (2021.01)
H01M 50/46 (2021.01)

(52) Cooperative Patent Classification (CPC):
H01M 10/0585; H01M 10/0562; H01M 50/204;
H01M 50/451; H01M 50/46; H01M 2300/0082

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.03.2024  CN 202410346260
22.05.2024  PCT/CN2024/094737

(71) Applicant: Eve Power Co., Ltd.
Jingmen, Hubei 448000 (CN)

(72) Inventors:
• GAO, Donglin
Jingmen, Hubei 448000 (CN)
• CHENG, Qingshun
Jingmen, Hubei 448000 (CN)
• SU, Bin
Jingmen, Hubei 448000 (CN)

(74) Representative: Berggren Oy
P.O. Box 16
Eteläinen Rautatiekatu 10A
00101 Helsinki (FI)

(54)  **BATTERY, METHOD FOR MANUFACTURING THE BATTERY, BATTERY PACK, AND ELECTRIC DEVICE**

(57)  The present application provides a battery, a method for manufacturing the battery, and an electric device. The battery includes a positive electrode sheet, a negative electrode sheet, and at least one laminated structure disposed on either the surface of the positive electrode sheet facing the negative electrode sheet or the surface of the negative electrode sheet facing the positive electrode sheet. The laminated structure includes an ion transport layer and an electron insulation layer stacked together. The battery does not include a separator.

FIG. 1

EP 4 625 581 A1

**Description**

TECHNICAL FIELD

The present application relates to the field of batteries, and more particularly to a battery, a method for manufacturing the battery, a battery pack, and an electric device.

BACKGROUND

Researchers in the field of batteries have been continuously seeking ways to reduce separator costs while improving battery performance and safety.

Nano-separator technology: One common approach involves using nano-coatings, such as nanofibers and nanoporous membranes, to fabricate separators. These separators, when applied to electrode materials, can achieve higher ionic conductivity and reduced thickness. For example, CN115663387A discloses a power lithium battery incorporating a nano-fiber ceramic separator positioned at the upper portion of the battery cell. However, nano-separators typically require costly production processes and may be susceptible to damage during extended use, thereby compromising long-term sustainability.

Solid-state battery technology: This approach involves battery designs that eliminate liquid electrolytes, thereby potentially obviating the need for separators. For instance, CN117276646A discloses a thin-film solid-state battery structure and its manufacturing method. In this design, the solid-state battery body is divided into positive and negative electrodes on both sides, with electrolyte film strips wrapped around the outer surfaces of both electrodes. While solid-state batteries offer potential advantages in terms of performance and safety, they currently face challenges including complex manufacturing processes, high production costs, and issues with the stability of solid electrolytes.

Ionic liquid electrolytes: An alternative approach involves the use of ionic liquids as electrolytes to enhance battery performance. For example, CN102651280A discloses an ionic liquid electrolyte including a formic acid-based ionic liquid and elemental iodine, which exhibits good conductivity. However, the potential toxicity of conventional ionic liquids may restrict their viability for large-scale applications. Although this particular solution replaced dicyanamide ionic liquids, addressing issues of degradation and toxic substance release, it still faces challenges related to high costs.

Multi-layer separator design: Some researchers have proposed multi-layer separator designs, one layer facilitates ion transport while another layer blocks electron conduction. For instance, CN201327852Y discloses a nickel battery incorporating multi-layer separators. This battery includes a battery shell housing a battery core, which consists of positive and negative electrode sheets stacked and wound into a cylindrical configuration. Multi-layer separators are positioned between the positive and negative electrode sheets, with adjacent separator layers joined by heat welding or adhesive bonding. While this approach can enhance safety, it still necessitates the use of separators, thus not fully addressing the cost and performance limitations associated with traditional separators.

While these approaches have made some progress in enhancing battery performance and safety, they share several common limitations and drawbacks: (1) Cost issues: Many of these technologies may increase battery manufacturing costs, potentially rendering them economically unfeasible in the highly competitive battery market; (2) Complexity: Some techniques involve complex manufacturing processes or require expensive materials, making them impractical for large-scale production; (3) Stability and durability concerns: Certain methods may be susceptible to damage or degradation over extended use, compromising the long-term sustainability of the batteries; (4) Toxicity and environmental concerns: Some materials and technologies may involve toxic substances or environmentally unfriendly components, raising potential health and ecological issues.

SUMMARY

Despite numerous attempts to reduce separator costs and enhance battery performance and safety, existing technologies in the field still face significant challenges. Batteries produced using these methods often suffer from high production costs, manufacturing complexities, suboptimal performance, poor stability, and inadequate safety features.

In a first aspect, the present application provides a battery includes a positive electrode sheet, a negative electrode sheet, and at least one laminated structure disposed on either a surface of the positive electrode sheet facing the negative electrode sheet or a surface of the negative electrode sheet facing the positive electrode sheet, the laminated structure includes an ion transport layer and an electron insulation layer stacked together, and the battery does not include a separator.

In a second aspect, the present application provides a method for manufacturing the battery of the first aspect, the method including:

(1) depositing at least one laminated structure on one surface of either the positive electrode sheet or the negative electrode sheet to obtain an electrode sheet with at least one laminated structure disposed on one of its surfaces;

depositing each laminated structure includes first performing a first deposition to form an ion transport layer, and then performing a second deposition on the surface of the ion transport layer to form an electron insulation layer;

(2) assembling the battery by either performing a first lamination process by laminating the positive electrode sheet with at least one laminated structure obtained in step (1) and the negative electrode sheet, or performing a second lamination process by laminating the negative electrode sheet with at least one laminated structure obtained in step (1) and the positive electrode sheet;

in the first lamination process, the negative electrode sheet is positioned adjacent to the laminated structure, and in the second lamination process, the positive electrode sheet is positioned adjacent to the laminated structure.

In a third aspect, the present application provides a battery pack includes a case and a plurality of batteries disposed within the case, each of the batteries is the battery of the first aspect.

In a fourth aspect, the present application provides an electric device includes a battery compartment configured to accommodate the battery of the first aspect.

ADVANTAGEOUS EFFECTS

The battery of the present application does not include a separator. Instead, it utilizes at least one laminated structure, including an ion transport layer and an electron insulation layer stacked together, disposed on either a surface of the positive electrode sheet facing the negative electrode sheet or a surface of the negative electrode sheet facing the positive electrode sheet. This laminated structure facilitates ion transport and electron insulation. The battery of the present application offers several advantages: (1) by not including a conventional separator, the present application reduces material and labor costs associated with separator production and integration; (2) the battery design is simplified, reducing assembly complexity and associated labor costs; (3) the space between the positive and negative electrode sheets is reduced, resulting in a thinner battery with higher energy density; (4) the ion transport and electron insulation capabilities can be fine-tuned by optimizing the materials and structure of the ion transport and electron insulation layers; (5) by eliminating traditional separators, issues related to separator aging and damage are avoided, leading to improved battery stability; (6) the use of surface coatings on the electrode sheets for ion transport and electron insulation enhances battery safety and expands its potential applications.

The method for manufacturing the battery of the present application employs evaporation deposition techniques to sequentially deposit the ion transport layer and the electron insulation layer. This approach allows for precise control over the thickness of these layers, thereby enhancing the tunability of battery performance.

The battery pack of the present application incorporates the aforementioned battery design. The advantages of this battery pack are consistent with those described for the individual battery, and therefore are not reiterated here.

The electric device of the present application is designed to utilize the aforementioned battery. The advantages of this electric device align with those described for the individual battery, and therefore are not repeated here.

BRIEF DESCRIPTION OF THE DRAWINGS

FIG. 1 is a schematic structural diagram of a positive electrode sheet with a laminated structure disposed on its surface provided by some embodiments of the present application.
FIG. 2 is a schematic structural diagram of a negative electrode sheet with a laminated structure disposed on its surface provided by some embodiments of the present application.

Reference Numerals:

1 - positive electrode sheet
2 - ion transport layer
3 - electron insulation layer
4 - negative electrode sheet
10 - laminated structure

DETAILED DESCRIPTION OF THE EMBODIMENTS

The present application provides a battery, a method for manufacturing the battery, a battery pack, and an electric device. The battery of the present application does not include a separator. Instead, it utilizes at least one laminated structure, including an ion transport layer and an electron insulation layer, disposed on either the surface of the positive electrode sheet facing the negative electrode sheet or the surface of the negative electrode sheet facing the positive electrode sheet. This laminated structure facilitates ion transport and electron insulation. The battery of the present application simultaneously offers advantages of lower production costs, simplified manufacturing processes, improved performance, enhanced stability, and increased safety.

To achieve these objectives, the present application provides the following technical solutions:

In a first aspect, the present application provides a battery includes a positive electrode sheet, a negative electrode sheet, and at least one laminated structure disposed on either a surface of the positive electrode sheet facing the negative electrode sheet or a surface of the negative electrode sheet facing the positive electrode sheet, the laminated structure includes an ion transport layer and an electron insulation layer stacked together, and the battery does not include a separator.

The battery of the present application does not include a separator. Instead, it utilizes at least one laminated structure, including an ion transport layer and an electron insulation layer stacked together, disposed on either a surface of the positive electrode sheet facing the negative electrode sheet or a surface of the negative electrode sheet facing the positive electrode sheet. This laminated structure facilitates ion transport and electron insulation. The battery of the present application offers several advantages: (1) by not including a conventional separator, the present application reduces material and labor costs associated with separator production and integration; (2) the battery design is simplified, reducing assembly complexity and associated labor costs; (3) the space between the positive and negative electrode sheets is reduced, resulting in a thinner battery with higher energy density; (4) the ion transport and electron insulation capabilities can be fine-tuned by optimizing the materials and structure of the ion transport and electron insulation layers; (5) by eliminating traditional separators, issues related to separator aging and damage are avoided, leading to improved battery stability; (6) the use of surface coatings on the electrode sheets for ion transport and electron insulation enhances battery safety and expands its potential applications.

Thus, the battery of the present application simultaneously offers advantages of lower production costs, simplified manufacturing processes, improved performance, enhanced stability, and increased safety.

Preferably, the battery of the present application further includes an electrolyte. The electrolyte may include, for example, lithium hexafluorophosphate and a solvent. The solvent may include one or a combination of at least two of carbonate esters (such as butyl propionate and ethylene carbonate dimethyl ether), ethers (such as dimethyl ether and ethylene glycol dimethyl ether), or esters (such as ethyl acetate). However, the specific composition of the electrolyte is not limited to these examples, and any combination of components known in the art as suitable for use as an electrolyte may be applied.

Preferably, the positive electrode sheet includes a positive electrode current collector and a positive electrode active material layer covering at least one side surface of the positive electrode current collector. The thickness of the positive electrode active material layer is between 100 $\mu$m and 150 $\mu$m, for example, it may be 100 $\mu$m, 105 $\mu$m, 110 $\mu$m, 115 $\mu$m, 120 $\mu$m, 125 $\mu$m, 130 $\mu$m, 135 $\mu$m, 140 $\mu$m, 145 $\mu$m, or 150 $\mu$m. However, these values are not limiting, and other values within this range may also be applicable.

In the present application, the positive electrode current collector includes aluminum foil and/or composite aluminum foil.

In the present application, the positive electrode active material layer includes one or a combination of at least two of lithium iron phosphate, lithium manganese oxide, or lithium cobalt oxide. Typical, but non-limiting, combinations include a combination of lithium iron phosphate and lithium manganese oxide, a combination of lithium manganese oxide and lithium cobalt oxide, or a combination of lithium iron phosphate, lithium manganese oxide, and lithium cobalt oxide. However, the specific composition of the positive electrode active material layer is not limited to these examples, and any combination of components known in the art as suitable for use as a positive electrode active material may be applied.

Preferably, when at least one of the laminated structures is disposed on the surface of the positive electrode sheet, the laminated structure is disposed on the surface of the positive electrode active material layer.

Preferably, the negative electrode sheet includes a negative electrode current collector and a negative electrode active material layer covering at least one side surface of the negative electrode current collector. The thickness of the negative electrode active material layer is between 100 $\mu$m and 150 $\mu$m, for example, it may be 100 $\mu$m, 105 $\mu$m, 110 $\mu$m, 115 $\mu$m, 120 $\mu$m, 125 $\mu$m, 130 $\mu$m, 135 $\mu$m, 140 $\mu$m, 145 $\mu$m, or 150 $\mu$m. However, these values are not limiting, and other values within this range may also be applicable.

In the present application, the negative electrode current collector includes copper foil, composite copper foil and/or a combination thereof.

In the present application, the negative electrode active material layer includes one or a combination of at least two of graphite, silicon, or sulfide. Typical, but non-limiting, combinations include a combination of graphite and silicon, a combination of silicon and sulfide, or a combination of graphite, silicon, and sulfide. However, the specific composition of the negative electrode active material layer is not limited to these examples, and any combination of components known in the art as suitable for use as a negative electrode active material may be applied.

Preferably, when at least one of the laminated structures is disposed on the surface of the negative electrode sheet, the laminated structure is disposed on the surface of the negative electrode active material layer.

Preferably, the total thickness of all the laminated structures is between 1 μm and 20 μm. For example, it may be 1 μm, 3 μm, 5 μm, 7 μm, 9 μm, 11 μm, 13 μm, 15 μm, 17 μm, or 20 μm. However, these values are not limiting, and other values within this range may also be applicable.

Preferably, the thickness of the ion transport layer is between 0.5 μm and 2 μm. For example, it may be 0.5 μm, 0.8 μm, 1.0 μm, 1.2 μm, 1.4 μm, 1.6 μm, 1.8 μm, or 2 μm. However, these values are not limiting, and other values within this range may also be applicable.

Preferably, the thickness of the electron insulation layer is between 0.5 μm and 2 μm. For example, it may be 0.5 μm, 0.8 μm, 1.0 μm, 1.2 μm, 1.4 μm, 1.6 μm, 1.8 μm, or 2 μm. However, these values are not limiting, and other values within this range may also be applicable.

Preferably, the ion transport layer includes polymer materials.

Preferably, the polymer materials include one or a combination of at least two of polystyrene sulfonic acid, polymethyl methacrylate, or polyethylene oxide. Typical, but non-limiting, combinations include a combination of polystyrene sulfonic acid and polymethyl methacrylate, a combination of polymethyl methacrylate and polyethylene oxide, or a combination of polystyrene sulfonic acid, polymethyl methacrylate, and polyethylene oxide.

Preferably, the electron insulation layer includes ceramic materials.

Preferably, the ceramic materials include one or a combination of at least two of silicon nitride, aluminum oxide, or zinc oxide. Typical, but non-limiting, combinations include a combination of silicon nitride and aluminum oxide, a combination of aluminum oxide and zinc oxide, or a combination of silicon nitride, aluminum oxide, and zinc oxide.

In a second aspect, the present application provides a method for manufacturing the battery of the first aspect, the method includes:

(1) depositing at least one laminated structure on one surface of either the positive electrode sheet or the negative electrode sheet to obtain an electrode sheet with at least one laminated structure disposed on one of its surfaces; depositing each laminated structure includes first performing a first deposition to form an ion transport layer, and then performing a second deposition on the surface of the ion transport layer to form an electron insulation layer;

(2) assembling the battery by either performing a first lamination process by laminating the positive electrode sheet with at least one laminated structure obtained in step (1) and the negative electrode sheet; or performing a second lamination process by laminating the negative electrode sheet with at least one laminated structure obtained in step (1) and the positive electrode sheet;

in the first lamination process, the negative electrode sheet is positioned adjacent to the laminated structure, and in the second lamination process, the positive electrode sheet is positioned adjacent to the laminated structure.

Preferably, the first deposition includes performing a first evaporation deposition process to evaporate-deposit an ion transport layer solution, thereby forming the ion transport layer.

Preferably, the second deposition includes performing a second evaporation deposition process to evaporate-deposit an electron insulation layer solution on the surface of the ion transport layer, thereby forming the electron insulation layer.

The method of the present application employs evaporation deposition techniques to sequentially deposit the ion transport layer and the electron insulation layer. This approach allows for precise control over the thickness of these layers on either the positive electrode sheet or the negative electrode sheet, thereby enhancing the tunability of battery performance.

In the present application, equipment such as vacuum pumps are used to evacuate the evaporation deposition chamber, ensuring that both the first and second evaporation deposition processes are conducted in a high vacuum environment.

In the present application, the ion transport layer solution is mechanically stirred in a stirrer at a speed maintained between 1000 and 2000 rpm for a homogenization time of 20 to 60 minutes. This ensures uniform dispersion of the polymer materials in the solution. The resulting ion transport layer solution is then loaded into the evaporation deposition device for subsequent deposition.

Similarly, the electron insulation layer solution is mechanically stirred in a stirrer at a speed maintained between 1000 and 2000 rpm for a homogenization time of 20 to 60 minutes. This ensures uniform dispersion of the ceramic materials in the solution. The resulting electron insulation layer solution is then loaded into the evaporation deposition device for subsequent deposition.

Preferably, the ion transport layer solution includes polymer materials, a first binder, and a first organic solvent.

Preferably, the first binder includes one or a combination of at least two of sodium carboxymethyl cellulose, polytetrafluoroethylene, and polyacrylate. Typical, but non-limiting, combinations include a combination of sodium carboxymethyl cellulose and polytetrafluoroethylene, a combination of polytetrafluoroethylene and polyacrylate, or a combination of sodium carboxymethyl cellulose, polytetrafluoroethylene, and polyacrylate.

Preferably, the first organic solvent includes one or a combination of at least two of dimethylformamide, methanol, and ethyl acetate. Typical, but non-limiting, combinations include a combination of dimethylformamide and methanol, a combination of methanol and ethyl acetate, or a combination of dimethylformamide, methanol, and ethyl acetate.

Preferably, the mass ratio of the polymer materials, first binder, and first organic solvent is in the range of (5-9):(0.5-1.5):(1-3).

In the present application, the mass ratio of the polymer materials to the first binder is in the range of (5-9):(0.5-1.5). For example, this ratio may be 5:0.5, 5:0.7, 5:0.9, 5:1.1, 5:1.3, 5:1.5, 7:0.5, 7:0.9, 7:1.1, 7:1.3, 7:1.5, 9:0.5, 9:0.7, 9:1.1, 9:1.3, or 9:1.5. However, these values are not limiting, and other values within this range may also be applicable.

In the present application, the mass ratio of the polymer materials to the first organic solvent is in the range of (5-9):(1-3). For example, this ratio may be 5:1, 5:2, 5:3, 7:1, 7:2, 7:3, 9:1, 9:2, or 9:3. However, these values are not limiting, and other values within this range may also be applicable.

Preferably, the electron insulation layer solution includes ceramic materials, a second binder, and a second organic solvent.

Preferably, the second binder includes one or a combination of at least two of sodium carboxymethyl cellulose, polytetrafluoroethylene, and polyacrylate. Typical, but non-limiting, combinations include a combination of sodium carboxymethyl cellulose and polytetrafluoroethylene, a combination of polytetrafluoroethylene and polyacrylate, or a combination of sodium carboxymethyl cellulose, polytetrafluoroethylene, and polyacrylate.

Preferably, the second organic solvent includes one or a combination of at least two of dimethylformamide, methanol, and ethyl acetate. Typical, but non-limiting, combinations include a combination of dimethylformamide and methanol, a combination of methanol and ethyl acetate, or a combination of dimethylformamide, methanol, and ethyl acetate.

Preferably, the mass ratio of the ceramic materials, second binder, and second organic solvent is in the range of (5-9):(0.5-1.5):(1-3).

In the present application, the mass ratio of the ceramic materials to the second binder is in the range of (5-9):(0.5-1.5). For example, this ratio may be 5:0.5, 5:0.7, 5:0.9, 5:1.1, 5:1.3, 5:1.5, 7:0.5, 7:0.9, 7:1.1, 7:1.3, 7:1.5, 9:0.5, 9:0.7, 9:1.1, 9:1.3, or 9:1.5. However, these values are not limiting, and other values within this range may also be applicable.

In the present application, the mass ratio of the ceramic materials to the second organic solvent is in the range of (5-9):(1-3). For example, this ratio may be 5:1, 5:2, 5:3, 7:1, 7:2, 7:3, 9:1, 9:2, or 9:3. However, these values are not limiting, and other values within this range may also be applicable.

Preferably, the vacuum level during the first evaporation deposition process and the second evaporation deposition process is independently between $10^{-6}$ Pa and $10^{-8}$ Pa. For example, the vacuum level may be $10^{-6}$ Pa, $10^{-6.2}$ Pa, $10^{-6.4}$ Pa, $10^{-6.6}$ Pa, $10^{-6.8}$ Pa, $10^{-7}$ Pa, $10^{-7.2}$ Pa, $10^{-7.4}$ Pa, $10^{-7.6}$ Pa, $10^{-7.8}$ Pa, or $10^{-8}$ Pa. However, these values are not limiting, and other values within this range may also be applicable.

Preferably, the distance between the evaporation deposition source and either the positive electrode sheet or the negative electrode sheet during the first evaporation deposition process and the second evaporation deposition process is independently between 10 cm and 50 cm. For example, this distance may be 10 cm, 15 cm, 20 cm, 25 cm, 30 cm, 35 cm, 40 cm, 45 cm, or 50 cm. However, these values are not limiting, and other values within this range may also be applicable.

In the present application, controlling the distance between the evaporation deposition source and either the positive electrode sheet or the negative electrode sheet during the evaporation deposition process ensures that the ion transport layer or electron insulation layer is uniformly deposited on the surface of either the positive electrode sheet or the negative electrode sheet, thereby enhancing the performance of the battery.

Preferably, the temperature of the evaporation deposition source during the first evaporation deposition process and the second evaporation deposition process is independently between 500°C and 2500°C. For example, this temperature may be 500°C, 800°C, 1000°C, 1200°C, 1400°C, 1600°C, 1800°C, 2000°C, 2200°C, 2400°C, or 2500°C. However, these values are not limiting, and other values within this range may also be applicable.

In the present application, the material from the evaporation deposition source is released in the form of molecules or atoms and deposited on the surface of either the positive electrode sheet or the negative electrode sheet. By controlling the temperature of the evaporation deposition source, the rate at which the material is released from the evaporation deposition source can be regulated, thereby controlling the formation rate of the ion transport layer and electron insulation layer.

Preferably, the evaporation deposition chamber is independently cooled during the first evaporation deposition process and the second evaporation deposition process.

In the present application, when the electron insulation layer solution and ion transport layer solution are evaporate-deposited, the gas is cooled at a lower temperature as it deposits on the surface of either the positive electrode sheet or the negative electrode sheet. This promotes the formation of a solid film. Cooling the evaporation deposition chamber enhances the stability and rate of coating formation.

Preferably, the cooling of the evaporation deposition chamber includes introducing nitrogen gas and/or inert gas into the evaporation deposition chamber.

In the present application, the cooling process is accelerated by introducing nitrogen gas and/or inert gas. The nitrogen gas is introduced into the evaporation deposition chamber through a gas supply system controlled by a gas flow controller, thereby achieving efficient cooling of the evaporation deposition chamber.

Preferably, the positive electrode sheet or the negative electrode sheet is independently controlled to move in a horizontal direction during the first evaporation deposition process and the second evaporation deposition process.

During both the first and second evaporation deposition processes, the positive electrode sheet or the negative electrode sheet is controlled to move in a horizontal direction within the evaporation deposition chamber. This movement ensures uniform distribution of the evaporate-deposited material on the surface of either the positive electrode sheet or the negative electrode sheet, preventing localized over-deposition or under-deposition. As a result, the uniformity of the ion transport layer or electron insulation layer is improved, thereby enhancing the overall performance of the battery.

In a preferred embodiment, the method for manufacturing the battery includes:

(1) depositing at least one laminated structure on one surface of either the positive electrode sheet or the negative electrode sheet to obtain an electrode sheet with at least one laminated structure disposed on one of its surfaces;

depositing each laminated structure includes first performing a first evaporation deposition process to evaporate-deposit an ion transport layer solution, thereby forming an ion transport layer, and then performing a second evaporation deposition process to evaporate-deposit an electron insulation layer solution on the surface of the ion transport layer, thereby forming an electron insulation layer;

the ion transport layer solution includes polymer materials, a first binder, and a first organic solvent in a mass ratio of (5-9):(0.5-1.5):(1-3);

the electron insulation layer solution includes ceramic materials, a second binder, and a second organic solvent in a mass ratio of (5-9):(0.5-1.5):(1-3);

the vacuum level during the first evaporation deposition process and the second evaporation deposition process is independently between $10^{-6}$ Pa and $10^{-8}$ Pa, the distance between the evaporation deposition source and either the positive electrode sheet or the negative electrode sheet during the first evaporation deposition process and the second evaporation deposition process is independently between 10 cm and 50 cm, and the temperature of the evaporation deposition source during the first evaporation deposition process and the second evaporation deposition process is independently between 500°C and 2500°C;

during both the first evaporation deposition process and the second evaporation deposition process, the evaporation deposition chamber is independently cooled by introducing nitrogen gas and/or inert gas into the evaporation deposition chamber, and the positive electrode sheet or the negative electrode sheet is independently controlled to move in a horizontal direction;

(2) assembling the battery by either performing a first lamination process by laminating the positive electrode sheet with at least one laminated structure obtained in step (1) and the negative electrode sheet, or performing a second lamination process by laminating the negative electrode sheet with at least one laminated structure obtained in step (1) and the positive electrode sheet;

in the first lamination process, the negative electrode sheet is positioned adjacent to the laminated structure, and in the second lamination process, the positive electrode sheet is positioned adjacent to the laminated structure.

In a third aspect, the present application provides a battery pack includes a case and a plurality of batteries disposed within the case, each of the batteries is the battery of the first aspect.

In a fourth aspect, the present application provides an electric device includes a battery compartment configured to accommodate the battery of the first aspect.

The present application offers the following advantages over the related art:

The battery of the present application eliminates the need for traditional separator materials, thereby reducing material and labor costs in the battery production process;

The battery of the present application features a simplified structure, which reduces assembly complexity and associated labor costs;

The battery of the present application reduces the space between the positive and negative electrode sheets, resulting in a thinner battery with improved energy density;

The battery of the present application allows for fine-tuning of the ion transport and electron insulation capabilities through optimization of the materials and structure of the ion transport and electron insulation layers, thereby enhancing the controllability of battery performance;

By eliminating the need for traditional separators, the battery of the present application avoids issues related to separator aging and damage, thereby improving overall battery stability;

The battery of the present application enhances safety and expands potential applications by utilizing surface coatings on the electrode sheets for ion transport and electron insulation.

The method of the present application employs evaporation deposition techniques to sequentially deposit the ion transport layer and the electron insulation layer. This approach allows for precise control over the thickness of these layers on either the positive electrode sheet or the negative electrode sheet, thereby enhancing the tunability of battery performance;

The method of the present application controls the distance between the evaporation deposition source and either the positive electrode sheet or the negative electrode sheet, ensuring uniform deposition of the ion transport layer or electron insulation layer on the surface of either the positive electrode sheet or the negative electrode sheet, thereby enhancing battery performance;

The method of the present application involves evaporate-depositing the electron insulation layer solution and ion transport layer solution. The deposited material is cooled at a lower temperature on the surface of either the positive electrode sheet or the negative electrode sheet, promoting the formation of a solid film. Cooling the evaporation deposition chamber enhances the stability and rate of coating formation;

In the method of the present application, during both the first and second evaporation deposition processes, the positive electrode sheet or the negative electrode sheet is controlled to move in a horizontal direction within the evaporation deposition chamber. This movement ensures uniform distribution of the evaporate-deposited material on the surface of either the positive electrode sheet or the negative electrode sheet, preventing localized over-deposition or under-deposition. As a result, the uniformity of the ion transport layer or electron insulation layer is improved, thereby enhancing the overall performance of the battery.

The following specific embodiments are provided to further illustrate the technical solutions of the present application. It should be understood by those skilled in the art that these embodiments are intended to aid in understanding the present application and should not be construed as limiting the scope of the present application.

Embodiment 1

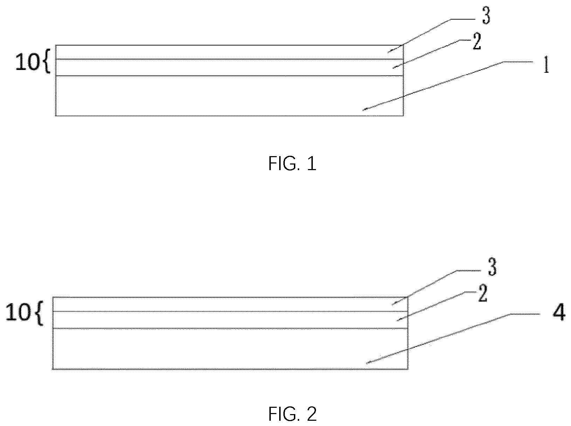

This embodiment provides a battery, as illustrated in FIG. 1, includes a positive electrode sheet 1, a negative electrode sheet 4, and five laminated structures 10 disposed on the surface of the positive electrode sheet 1 facing the negative electrode sheet 4, each laminated structure 10 includes an ion transport layer 2 with a thickness of 1 $\mu$m and an electron insulation layer 3 with a thickness of 1 $\mu$m stacked together, the total thickness of all laminated structures 10 is 10 $\mu$m, the ion transport layer 2 is a polystyrene sulfonic acid layer, the electron insulation layer 3 is a silicon nitride layer, and the battery does not include a separator.

The positive electrode sheet 1 includes a positive electrode current collector and a positive electrode active material layer covering at least one side surface of the positive electrode current collector, the active material in the positive electrode active material layer is lithium iron phosphate, the thickness of the positive electrode active material layer is 130 $\mu$m, and the laminated structure 10 is disposed on the surface of the positive electrode active material layer.

The negative electrode sheet 4 includes a negative electrode current collector and a negative electrode active material layer covering at least one side surface of the negative electrode current collector, the active material in the negative electrode active material layer is graphite, and the thickness of the negative electrode active material layer is 130 $\mu$m.

The battery further includes an electrolyte, the electrolyte includes lithium hexafluorophosphate and butyl propionate.

The method for manufacturing the battery includes:

(1) depositing at least one laminated structure 10 on one surface of the positive electrode sheet 1 to obtain a positive electrode sheet 1 with at least one laminated structure 10 disposed on one of its surfaces;

depositing each laminated structure 10 includes first performing a first evaporation deposition process to evaporate-deposit an ion transport layer solution, thereby forming the ion transport layer 2, and then performing a second evaporation deposition process to evaporate-deposit an electron insulation layer solution on the surface of the ion transport layer 2, thereby forming the electron insulation layer 3;

the ion transport layer solution includes polystyrene sulfonic acid, sodium carboxymethyl cellulose, and dimethylformamide in a mass ratio of 7:1:2;

the electron insulation layer solution includes silicon nitride, sodium carboxymethyl cellulose, and dimethylformamide in a mass ratio of 7:1:2;

the vacuum level during the first evaporation deposition process and the second evaporation deposition process

is independently $10^{-7}$ Pa, the distance between the evaporation deposition source and either the positive electrode sheet or the negative electrode sheet during the first evaporation deposition process and the second evaporation deposition process is independently 30 cm, and the temperature of the evaporation deposition source during the first evaporation deposition process and the second evaporation deposition process is independently 1500°C;

during both the first evaporation deposition process and the second evaporation deposition process, the evaporation deposition chamber is independently cooled by introducing nitrogen gas into the evaporation deposition chamber, and the positive electrode sheet 1 or the negative electrode sheet 4 is independently controlled to move in a horizontal direction;

(2) assembling the battery by laminating the positive electrode sheet 1 with at least one laminated structure 10 obtained in step (1) and the negative electrode sheet 4, in the lamination process, the negative electrode sheet 4 is positioned adjacent to the laminated structure 10.

Embodiment 2

This embodiment provides a battery includes a positive electrode sheet 1, a negative electrode sheet 4, and one laminated structure 10 disposed on the surface of the positive electrode sheet 1 facing the negative electrode sheet 4, the laminated structure 10 includes an ion transport layer 2 with a thickness of 0.5 $\mu$m and an electron insulation layer 3 with a thickness of 2 $\mu$m stacked together, the total thickness of the laminated structure 10 is 2.5 $\mu$m, the ion transport layer 2 is a polymethyl methacrylate layer, the electron insulation layer 3 is an aluminum oxide layer, and the battery does not include a separator.

The positive electrode sheet 1 includes a positive electrode current collector and a positive electrode active material layer covering at least one side surface of the positive electrode current collector, the active material in the positive electrode active material layer is lithium iron phosphate, the thickness of the positive electrode active material layer is 100 $\mu$m, and the laminated structure 10 is disposed on the surface of the positive electrode active material layer.

The negative electrode sheet 4 includes a negative electrode current collector and a negative electrode active material layer covering at least one side surface of the negative electrode current collector, the active material in the negative electrode active material layer is silicon, and the thickness of the negative electrode active material layer is 100 $\mu$m.

The battery further includes an electrolyte, the electrolyte includes lithium hexafluorophosphate and dimethyl ether.

The method for manufacturing the battery includes:

(1) depositing at least one laminated structure 10 on one surface of the positive electrode sheet 1 to obtain a positive electrode sheet 1 with at least one laminated structure 10 disposed on one of its surfaces;

depositing each laminated structure 10 includes first performing a first evaporation deposition process to evaporate-deposit an ion transport layer solution, thereby forming the ion transport layer 2, and then performing a second evaporation deposition process to evaporate-deposit an electron insulation layer solution on the surface of the ion transport layer 2, thereby forming the electron insulation layer 3;

the ion transport layer solution includes polymethyl methacrylate, polytetrafluoroethylene, and methanol in a mass ratio of 5:1.5:1;

the electron insulation layer solution includes aluminum oxide, polytetrafluoroethylene, and methanol in a mass ratio of 9:0.5:3;

the vacuum level during the first evaporation deposition process and the second evaporation deposition process is independently $10^{-6}$ Pa, the distance between the evaporation deposition source and either the positive electrode sheet or the negative electrode sheet during the first evaporation deposition process and the second evaporation deposition process is independently 10 cm, and the temperature of the evaporation deposition source during the first evaporation deposition process and the second evaporation deposition process is independently 500°C;

during both the first evaporation deposition process and the second evaporation deposition process, the evaporation deposition chamber is independently cooled by introducing argon gas into the evaporation deposition chamber, and the positive electrode sheet 1 or the negative electrode sheet 4 is independently controlled to move in a horizontal direction;

(2) assembling the battery by laminating the positive electrode sheet 1 with at least one laminated structure 10 obtained in step (1) and the negative electrode sheet 4, in the lamination process, the negative electrode sheet 4 is positioned adjacent to the laminated structure 10.

Embodiment 3

This embodiment provides a battery includes a positive electrode sheet 1, a negative electrode sheet 4, and eight laminated structures 10 disposed on the surface of the negative electrode sheet 4 facing the positive electrode sheet 1, as shown in FIG. 2, each laminated structure 10 includes an ion transport layer 2 with a thickness of 2 $\mu$m and an electron insulation layer 3 with a thickness of 0.5 $\mu$m stacked together, the total thickness of all laminated structures 10 is 20 $\mu$m, the ion transport layer 2 is a polyethylene oxide layer, the electron insulation layer 3 is a zinc oxide layer, and the battery does not include a separator.

The positive electrode sheet 1 includes a positive electrode current collector and a positive electrode active material layer covering at least one side surface of the positive electrode current collector, the active material in the positive electrode active material layer is lithium iron phosphate, and the thickness of the positive electrode active material layer is 150 $\mu$m.

The negative electrode sheet 4 includes a negative electrode current collector and a negative electrode active material layer covering at least one side surface of the negative electrode current collector, the active material in the negative electrode active material layer is graphite, the thickness of the negative electrode active material layer is 150 $\mu$m, and the laminated structure 10 is disposed on the surface of the negative electrode active material layer.

The battery further includes an electrolyte, the electrolyte includes lithium hexafluorophosphate and ethyl acetate.

The method for manufacturing the battery includes:

(1) depositing at least one laminated structure 10 on one surface of the negative electrode sheet 4 to obtain a negative electrode sheet 4 with at least one laminated structure 10 disposed on one of its surfaces;

depositing each laminated structure 10 includes first performing a first evaporation deposition process to evaporate-deposit an ion transport layer solution, thereby forming the ion transport layer 2, and then performing a second evaporation deposition process to evaporate-deposit an electron insulation layer solution on the surface of the ion transport layer 2, thereby forming the electron insulation layer 3;

the ion transport layer solution includes polyethylene oxide, polyacrylate, and ethyl acetate in a mass ratio of 9:0.5:3;

the electron insulation layer solution includes zinc oxide, polyacrylate, and ethyl acetate in a mass ratio of 5:1.5:1; the vacuum level during the first evaporation deposition process and the second evaporation deposition process is independently $10^{-8}$ Pa, the distance between the evaporation deposition source and either the positive electrode sheet or the negative electrode sheet during the first evaporation deposition process and the second evaporation deposition process is independently 50 cm, and the temperature of the evaporation deposition source during the first evaporation deposition process and the second evaporation deposition process is independently 2500°C;

during both the first evaporation deposition process and the second evaporation deposition process, the evaporation deposition chamber is independently cooled by introducing nitrogen gas into the evaporation deposition chamber, and the positive electrode sheet 1 or the negative electrode sheet 4 is independently controlled to move in a horizontal direction;

(2) assembling the battery by laminating the negative electrode sheet 4 with at least one laminated structure 10 obtained in step (1) and the positive electrode sheet 1, in the lamination process, the positive electrode sheet 1 is positioned adjacent to the laminated structure 10.

Embodiment 4

This embodiment provides a battery includes a positive electrode sheet 1, a negative electrode sheet 4, and four laminated structures 10 disposed on the surface of the negative electrode sheet 4 facing the positive electrode sheet 1, each laminated structure 10 includes an ion transport layer 2 with a thickness of 1 $\mu$m and an electron insulation layer 3 with a thickness of 0.5 $\mu$m stacked together, the total thickness of all laminated structures 10 is 6 $\mu$m, the ion transport layer 2 is a polystyrene sulfonic acid layer, the electron insulation layer 3 is a zinc oxide layer, and the battery does not include a separator.

The positive electrode sheet 1 includes a positive electrode current collector and a positive electrode active material layer covering at least one side surface of the positive electrode current collector, the active material in the positive electrode active material layer is lithium iron phosphate, and the thickness of the positive electrode active material layer is

120 μm.

The negative electrode sheet 4 includes a negative electrode current collector and a negative electrode active material layer covering at least one side surface of the negative electrode current collector, the active material in the negative electrode active material layer is graphite, the thickness of the negative electrode active material layer is 140 μm, and the laminated structure 10 is disposed on the surface of the negative electrode active material layer.

The battery further includes an electrolyte, the electrolyte includes lithium hexafluorophosphate and ethylene carbonate dimethyl ether.

The method for manufacturing the battery includes:

(1) depositing at least one laminated structure 10 on one surface of the negative electrode sheet 4 to obtain a negative electrode sheet 4 with at least one laminated structure 10 disposed on one of its surfaces;

depositing each laminated structure 10 includes first performing a first evaporation deposition process to evaporate-deposit an ion transport layer solution, thereby forming the ion transport layer 2, and then performing a second evaporation deposition process to evaporate-deposit an electron insulation layer solution on the surface of the ion transport layer 2, thereby forming the electron insulation layer 3;

the ion transport layer solution includes polystyrene sulfonic acid, sodium carboxymethyl cellulose, and ethyl acetate in a mass ratio of 6:1.2:1.5;

the electron insulation layer solution includes zinc oxide, sodium carboxymethyl cellulose, and ethyl acetate in a mass ratio of 8:0.8:1.8;

the vacuum level during the first evaporation deposition process and the second evaporation deposition process is independently $5 \times 10^{-7}$ Pa, the distance between the evaporation deposition source and either the positive electrode sheet or the negative electrode sheet during the first evaporation deposition process and the second evaporation deposition process is independently 40 cm, and the temperature of the evaporation deposition source during the first evaporation deposition process and the second evaporation deposition process is independently 1500°C;

during both the first evaporation deposition process and the second evaporation deposition process, the evaporation deposition chamber is independently cooled by introducing nitrogen gas into the evaporation deposition chamber, and the positive electrode sheet 1 or the negative electrode sheet 4 is independently controlled to move in a horizontal direction;

(2) assembling the battery by laminating the negative electrode sheet 4 with at least one laminated structure 10 obtained in step (1) and the positive electrode sheet 1, in the lamination process, the positive electrode sheet 1 is positioned adjacent to the laminated structure 10.

Comparative Example 1

This comparative example is the same as Embodiment 1, except that the electron insulation layer 3 in the laminated structure 10 is omitted.

Comparative Example 2

This comparative example is the same as Embodiment 1, except that the ion transport layer 2 in the laminated structure 10 is omitted.

Comparative Example 3

In this comparative example, the laminated structure 10 is omitted. Instead, a PP (polypropylene) separator is used between the positive electrode sheet and the lithium sheet. The active material of the positive electrode sheet is the same as that used in Embodiment 1.

Comparative Example 4

This comparative example is the same as Embodiment 1, except that the thickness of the ion transport layer 2 is changed to 0.3 μm.

Comparative Example 5

This comparative example is the same as Embodiment 1, except that the thickness of the ion transport layer 2 is changed to 2.5 μm.

Comparative Example 6

This comparative example is the same as Embodiment 1, except that the thickness of the electron insulation layer 3 is changed to 0.3 μm.

Comparative Example 7

This comparative example is the same as Embodiment 1, except that the thickness of the electron insulation layer 3 is changed to 2.5 μm.

Comparative Example 8

This comparative example is the same as Embodiment 1, except that instead of using evaporation deposition, a direct coating method is employed to prepare the electron insulation layer 3 and ion transport layer 2 in the laminated structure 10.

Energy density and thermal runaway performance tests were conducted on the batteries from Embodiments 1-4 and Comparative Examples 1-8. The test results are presented in Table 1.

The energy density test method is as follows:

Place the manufactured test battery in a temperature-controlled chamber at 23°C ± 2°C and allow it to stabilize for 2 to 12 hours. After the stabilization period, test the battery using an electrochemical performance analyzer. The recommended charge and discharge protocol is as follows:

(1) Charging: At 0.1C rate, charge with constant current to 3.75 V, then charge with constant voltage until the current drops to 0.05C.
(2) Discharging: At 0.1C rate, discharge with constant current to 2.0 V.
(3) Measuring the discharge energy E (in Wh).
(4) Repeating steps (2) and (3) two more times, and taking the average of the three discharge energy E values as $E_{average}$.
(5) Measuring the mass M of the test object (in kg) using a balance. The weighing should include at least the components specified in Appendix A. 1 of GB/T 31467.3-2015.
(6) Calculating the discharge energy density PED of the test object (in Wh/kg) using the following formula:

$$PED = E_{average} / M$$

The thermal runaway performance test method for the battery is based on infrared imaging detection of lithium battery thermal runaway. The specific steps are as follows:

Use an infrared thermal imaging camera to detect the specific wavelength signals of infrared thermal radiation from the battery. Convert these signals into images and graphics that can be visually interpreted.

Preprocess the image, apply median filtering for noise reduction, and identify candidate regions.

Apply non-maximum suppression (NMS) processing to the candidate regions to identify the region with the highest temperature. Calculate the maximum temperature in this region.

Determine if the maximum temperature exceeds the preset threshold of 200°C. If it does, trigger an alarm. If not, continue monitoring and collecting the maximum temperature of the identified region.

Table 1

|  | Energy Density (Wh/kg) | Thermal Runaway Performance |
|---|---|---|
| Embodiment 1 | 180 | Normal |
| Embodiment 2 | 178 | Normal |

(continued)

|  | Energy Density (Wh/kg) | Thermal Runaway Performance |
|---|---|---|
| Embodiment 3 | 178 | Normal |
| Embodiment 4 | 176 | Normal |
| Comparative Example 4 | 172 | Normal |
| Comparative Example 5 | 170 | Normal |
| Comparative Example 6 | 172 | Normal |
| Comparative Example 7 | 170 | Normal |
| Comparative Example 8 | 165 | Normal |
| Comparative Example 1 | / | Runaway |
| Comparative Example 2 | 150 | Normal |
| Comparative Example 3 | 168 | Normal |

The following conclusions can be drawn from Table 1:

(1) The batteries in Embodiments 1-4 do not use traditional separators, thus avoiding issues related to separator aging and damage. This significantly reduces the cell thickness, increasing the controllable space between the positive and negative electrodes, and consequently improving the energy density of the battery.

(2) Comparing Embodiment 1 with Comparative Examples 4 and 5 reveals that both excessively thick and thin ion transport layers 2 lead to decreased battery energy density. An overly thick layer increases the battery's internal resistance, causing additional energy loss during charge and discharge cycles, thus reducing energy density. Conversely, an excessively thin layer may restrict ion transport between electrodes, increasing polarization effects and voltage losses during cycling, also resulting in reduced energy density.

(3) Comparison of Embodiment 1 with Comparative Examples 6 and 7 shows that both excessively thick and thin electron insulation layers 3 result in decreased battery energy density. An overly thick layer increases resistance to electron transfer between the electrode and electrolyte, raising the battery's internal resistance and leading to increased energy loss during cycling, thus reducing energy density. Conversely, an excessively thin layer allows direct contact between electrolyte ions and the electrode, increasing electron-ion reactions within the battery. This can lead to side reactions and corrosion, shortening the battery's cycle life and consequently reducing its energy density.

(4) Comparison of Embodiment 1 with Comparative Example 8 demonstrates that using a direct coating method instead of evaporation deposition for preparing the electron insulation layer 3 and ion transport layer 2 results in lower battery energy density. This is attributed to the coating method's limitations in precise thickness control, higher likelihood of defects, and poorer interface quality, all of which lead to decreased battery performance and consequently reduced energy density.

(5) Comparison of Embodiments 1-4 with Comparative Example 1 reveals that the absence of an evaporate-deposited electron insulation layer 3 leads to thermal runaway in the battery. This occurs because without an electron insulation layer separating the positive and negative electrodes, a short circuit can develop between them, causing the battery to overheat and resulting in thermal runaway.

(6) Comparison of Embodiments 1-4 with Comparative Example 2 shows that the absence of an evaporate-deposited ion transport layer 2 significantly reduces the battery's energy density. This is due to the resulting obstruction of ion transport, increased polarization effects, and decreased battery capacity, all of which contribute to reduced energy density.

(7) Comparison of Embodiments 1-4 with Comparative Example 3 demonstrates that using a PP separator between the positive electrode sheet and the lithium sheet, instead of evaporate-deposited ion transport 2 and electron insulation 3 layers, results in lower battery energy density. This is because the PP separator has a lower ion transport rate compared to the specially designed ion transport layer, leading to obstructed ion transport during battery cycling. Additionally, potential interface stability issues can arise, resulting in decreased charge-discharge efficiency and increased internal resistance, all contributing to reduced energy density.

**Claims**

1. A battery, **characterized by** comprising:

a positive electrode sheet (1);
a negative electrode sheet (4); and
at least one laminated structure (10) disposed on either a surface of the positive electrode sheet (1) facing the negative electrode sheet (4) or a surface of the negative electrode sheet (4) facing the positive electrode sheet (1), wherein the laminated structure (10) comprises an ion transport layer (2) and an electron insulation layer (3) stacked together; and
wherein the battery does not comprise a separator.

2. The battery of claim 1, **characterized in that**:

the positive electrode sheet (1) comprises a positive electrode current collector and a positive electrode active material layer covering at least one side surface of the positive electrode current collector, wherein a thickness of the positive electrode active material layer is between 100 $\mu$m and 150 $\mu$m;
and/or, when at least one laminated structure (10) is disposed on the surface of the positive electrode sheet (1), the laminated structure (10) is disposed on the surface of the positive electrode active material layer;
and/or, the negative electrode sheet (4) comprises a negative electrode current collector and a negative electrode active material layer covering at least one side surface of the negative electrode current collector, wherein a thickness of the negative electrode active material layer is between 100 $\mu$m and 150 $\mu$m;
and/or, when at least one laminated structure (10) is disposed on the surface of the negative electrode sheet (4), the laminated structure (10) is disposed on the surface of the negative electrode active material layer.

3. The battery of claim 1 or 2, **characterized in that**:

a total thickness of the laminated structure (10) is between 1 $\mu$m and 20 $\mu$m;
and/or, a thickness of the ion transport layer (2) is between 0.5 $\mu$m and 2 $\mu$m;
and/or, a thickness of the electron insulation layer (3) is between 0.5 $\mu$m and 2 $\mu$m.

4. The battery of any one of claims 1 to 3, **characterized in that** the ion transport layer (2) comprises polymer materials, wherein the polymer materials comprise one or a combination of at least two of polystyrene sulfonic acid, polymethyl methacrylate, and polyethylene oxide.

5. The battery of any one of claims 1 to 4, **characterized in that** the electron insulation layer (3) comprises ceramic materials, wherein the ceramic materials comprise one or a combination of at least two of silicon nitride, aluminum oxide, and zinc oxide.

6. The battery of any one of claims 1 to 5, **characterized in that** a plurality of layers of the laminated structure (10) disposed on either the surface of the positive electrode sheet (1) facing the negative electrode sheet (4) or the surface of the negative electrode sheet (4) facing the positive electrode sheet (1) is between 1 and 10.

7. A method for manufacturing the battery of any one of claims 1 to 6, **characterized in that** the method comprises:

(1) depositing at least one laminated structure (10) on one surface of either the positive electrode sheet (1) or the negative electrode sheet (4) to obtain a positive electrode sheet with the at least one laminated structure (10) disposed on the surface or a negative electrode sheet with the at least one laminated structure (10) disposed on the surface;
wherein depositing each of the at least one laminated structure (10) comprises first performing a first deposition to form an ion transport layer (2), and then performing a second deposition on the surface of the ion transport layer (2) to form an electron insulation layer (3);
(2) assembling the battery by either performing a first lamination process by laminating the positive electrode sheet (1) with the at least one laminated structure disposed on the surface obtained in step (1) and the negative electrode sheet (4), or performing a second lamination process by laminating the negative electrode sheet (4) with the at least one laminated structure (10) disposed on the surface obtained in step (1) and the positive electrode sheet (1);
wherein in the first lamination process, the negative electrode sheet (4) is positioned adjacent to the laminated structure (10), and in the second lamination process, the positive electrode sheet (1) is positioned adjacent to the laminated structure (10).

8. The method of claim 7, **characterized in that**:

the first deposition comprises performing a first evaporation deposition process to evaporate-deposit an ion transport layer solution, thereby forming the ion transport layer (2);

and/or, the second deposition comprises performing a second evaporation deposition process to evaporate-deposit an electron insulation layer solution on the surface of the ion transport layer (2), thereby forming the electron insulation layer (3).

9. The method of claim 8, **characterized in that**:

the ion transport layer solution comprises polymer materials, a first binder, and a first organic solvent;

and/or, the first binder comprises one or a combination of at least two of sodium carboxymethyl cellulose, polytetrafluoroethylene, and polyacrylate;

and/or, the first organic solvent comprises one or a combination of at least two of dimethylformamide, methanol, and ethyl acetate;

and/or, a mass ratio of the polymer materials, first binder, and first organic solvent is in the range of (5-9):(0.5-1.5):(1-3).

10. The method of claim 8, **characterized in that**:

the electron insulation layer solution comprises ceramic materials, a second binder, and a second organic solvent;

and/or, the second binder comprises one or a combination of at least two of sodium carboxymethyl cellulose, polytetrafluoroethylene, and polyacrylate;

and/or, the second organic solvent comprises one or a combination of at least two of dimethylformamide, methanol, and ethyl acetate;

and/or, a mass ratio of the ceramic materials, second binder, and second organic solvent is in the range of (5-9):(0.5-1.5):(1-3).

11. The method of claim 8, **characterized in that**:

a vacuum level during the first evaporation deposition process and the second evaporation deposition process is independently between $10^{-6}$ Pa and $10^{-8}$ Pa;

and/or, a distance between an evaporation deposition source and either the positive electrode sheet or the negative electrode sheet during the first evaporation deposition process and the second evaporation deposition process is independently between 10 cm and 50 cm;

and/or, a temperature of the evaporation deposition source during the first evaporation deposition process and the second evaporation deposition process is independently between 500°C and 2500°C.

12. The method of claim 8 or 11, **characterized in that**:

an evaporation deposition chamber is independently cooled during the first evaporation deposition process and the second evaporation deposition process;

and/or, the cooling of the evaporation deposition chamber comprises introducing nitrogen gas and/or inert gas into the evaporation deposition chamber;

and/or, the positive electrode sheet (1) or the negative electrode sheet (4) is independently controlled to move in a horizontal direction during the first evaporation deposition process and the second evaporation deposition process.

13. A method for manufacturing the battery of any one of claims 1 to 6, **characterized in that** the method comprising:

(1) depositing at least one laminated structure (10) on one surface of either the positive electrode sheet (1) or the negative electrode sheet (4) to obtain an electrode sheet with at least one laminated structure (10) disposed on one of its surfaces;

wherein depositing each laminated structure (10) comprises first performing a first evaporation deposition process to evaporate-deposit an ion transport layer solution, thereby forming an ion transport layer (2), and then performing a second evaporation deposition process to evaporate-deposit an electron insulation layer solution on the surface of the ion transport layer (2), thereby forming an electron insulation layer (3);

wherein the ion transport layer solution comprises polymer materials, a first binder, and a first organic solvent in a mass ratio of (5-9):(0.5-1.5):(1-3), the electron insulation layer solution comprises ceramic materials, a second binder, and a second organic solvent in a mass ratio of (5-9):(0.5-1.5):(1-3), during both the first evaporation deposition process and the second evaporation deposition process, the vacuum level is independently maintained between $10^{-6}$ Pa and $10^{-8}$ Pa, the distance between the evaporation deposition source and either the positive electrode sheet or the negative electrode sheet is independently set between 10 cm and 50 cm, the temperature is independently controlled between 500°C and 2500°C, the evaporation deposition chamber is independently cooled by introducing nitrogen gas and/or inert gas into the evaporation deposition chamber, and the positive electrode sheet (1) or the negative electrode sheet (4) is independently controlled to move in a horizontal direction;

(2) assembling the battery by either performing a first lamination process by laminating the positive electrode sheet (1) with at least one laminated structure (10) obtained in step (1) and the negative electrode sheet (4), or performing a second lamination process by laminating the negative electrode sheet (4) with at least one laminated structure (10) obtained in step (1) and the positive electrode sheet (1);

wherein in the first lamination process, the negative electrode sheet (4) is positioned adjacent to the laminated structure (10), and in the second lamination process, the positive electrode sheet is positioned adjacent to the laminated structure (10).

14. A battery pack, **characterized by** comprising:

a case; and
a plurality of batteries disposed within the case,
wherein each of the batteries is the battery of any one of claims 1 to 6.

15. An electric device, **characterized by** comprising:
a battery compartment configured to accommodate the battery of any one of claims 1 to 6.

FIG. 1

FIG. 2

Europäisches
Patentamt

European
Patent Office

Office européen
des brevets

# EUROPEAN SEARCH REPORT

**Application Number**

EP 25 15 8162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/411701 A1 (GRUAR ROBERT IAN JOSEPH [GB] ET AL) 21 December 2023 (2023-12-21) | 1-4, 6-12,14, 15 | INV. H01M10/0562 H01M10/0585 |
| Y A | * paragraphs [0001], [0017], [0018], [0050], [0062], [0086], [0088], [0092], [0117], [0136], [0137], [0147] - [0149], [0153], [0160]; claim 27; figures 1,4-6 * | 5 13 | H01M50/204 H01M50/451 H01M50/46 |
| X | US 2016/308243 A1 (HERLE SUBRAMANYA P [US] ET AL) 20 October 2016 (2016-10-20) | 1-3,6,8, 12,14,15 | |
| A | * paragraphs [0003], [0005], [0006], [0016], [0021], [0023], [0026]; figure 1 * | 4,5,7, 9-11,13 | |
| Y | WO 2023/190517 A1 (MAXELL LTD [JP]) 5 October 2023 (2023-10-05) | 5 | |
| A | * paragraph [0029] * | 1-4,6-15 | |

**TECHNICAL FIELDS SEARCHED (IPC)**

H01M

The present search report has been drawn up for all claims

| Place of search | Date of completion of the search | Examiner |
|---|---|---|
| Munich | 8 July 2025 | Posch, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 8162

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | | Publication date | Patent family member(s) | | Publication date |
|---|---|---|---|---|---|
| US 2023411701 | A1 | 21-12-2023 | CN | 116583981 A | 11-08-2023 |
| | | | GB | 2601481 A | 08-06-2022 |
| | | | US | 2023411701 A1 | 21-12-2023 |
| | | | WO | 2022112735 A1 | 02-06-2022 |
| US 2016308243 | A1 | 20-10-2016 | JP | 2016517157 A | 09-06-2016 |
| | | | KR | 20160002988 A | 08-01-2016 |
| | | | TW | 201445795 A | 01-12-2014 |
| | | | US | 2016308243 A1 | 20-10-2016 |
| | | | WO | 2014176266 A1 | 30-10-2014 |
| WO 2023190517 | A1 | 05-10-2023 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115663387 A
- CN 117276646 A
- CN 102651280 A
- CN 201327852 Y
- GB 3146732015 T